# FASCICULE DE BREVET EUROPEEN

(11) **EP 3 081 483 B1**
(45) Date de publication et mention de la délivrance du brevet: **10.04.2019**
(21) Numéro de dépôt: 16157381.1
(22) Date de dépôt: 25.02.2016
(51) Int. Cl.: B64C 27/32, F16F 9/56

(54) **MECANISME DE BUTEE EN BATTEMENT D'UN ENSEMBLE SUSTENTATEUR, ROTOR POUR GIRAVION COMPORTANT CE MECANISME DE BUTEE, ET GIRAVION**
ANSCHLAGMECHANISMUS EINER AUFTRIEBSERZEUGENDEN EINHEIT, ROTOR FÜR DREHFLÜGELFLUGZEUG, DER DIESEN ANSCHLAGMECHANISMUS UMFASST, UND ENTSPRECHENDES DREHFLÜGELFLUGZEUG
A FLAPPING ABUTMENT MECHANISM FOR A LIFT ASSEMBLY, A ROTORCRAFT ROTOR INCLUDING THE ABUTMENT MECHANISM, AND A ROTORCRAFT

(30) Priorité: 27.03.2015 FR 1500621
(43) Date de publication de la demande: 19.10.2016
(73) Titulaire: Airbus Helicopters, 13725 Marignane Cedex (FR)
(72) Inventeur: MASSAL, Fabien, 13119 Saint-Savournin (FR)
(74) Mandataire: GPI & Associés

(56) Documents cités:
- EP-A1- 0 135 296
- FR-A1- 2 447 856
- GB-A- 2 024 133
- US-A- 2 554 774
- US-A1- 2012 256 055
- US-A1- 2014 262 645

## Description

La présente invention concerne un mécanisme de butée en battement d'un ensemble sustentateur, un rotor de giravion, et un giravion muni d'un tel rotor.

L'invention se situe donc dans le domaine technique des rotors de giravion. Plus spécifiquement, l'invention se situe dans le domaine des butées équipant de tels rotors pour limiter le mouvement en battement des éléments sustentateurs portés de ce rotor.

En effet, un giravion comporte usuellement au moins un rotor pour assurer au moins en partie la sustentation voire la propulsion de ce giravion.

Un rotor comprend au moins deux ensembles sustentateurs mis en rotation par un système d'entraînement. Chaque ensemble sustentateur est notamment fixé au système d'entraînement par au moins un organe de retenue et de mobilité

Par exemple, un tel système d'entrainement comporte un moyeu solidaire en rotation d'un mât rotatif. Par suite, chaque ensemble sustentateur est muni d'une pale reliée au moyeu par au moins un organe de retenue et de mobilité. Un organe de retenue et de mobilité inclut éventuellement une articulation dénommée « butée sphérique ». Chaque butée sphérique peut avoir une armature fixée au moyeu et une armature fixée à un manchon, que ce manchon soit intégré ou non à un élément sustentateur de la pale.

Chaque pale peut donc comprendre un élément sustentateur fixé à un manchon ou encore un élément sustentateur muni d'un manchon intégré. Les pales sont donc des éléments allongés sensiblement plans, qui sont portés à l'une de leurs extrémités par un système d'entraînement.

Les organes de retenue et de mobilité équipent respectivement chacun des ensembles sustentateurs à leur emplanture pour autoriser leur manoeuvre par un opérateur. Le montage mobile des ensembles sustentateurs sur un système d'entraînement permet par exemple à un pilote de giravion d'opérer en vol des variations collectives ou cycliques du pas des ensembles sustentateurs pour influer sur le comportement du giravion au regard de sa sustentation et/ou de sa propulsion.

La mobilité des ensembles sustentateurs par rapport à un système d'entraînement autorise par exemple leur déplacement en traînée, en pas et en battement vers le haut et vers le bas. Les notions de haut et de bas sont à considérer suivant l'orientation d'extension de l'axe de rotation du rotor. Lorsque le rotor tourne à une vitesse nominale, les ensembles sustentateurs sont spontanément entraînés vers le haut sous l'effet de la force centrifuge et de la portance de ces ensembles sustentateurs. Lorsque le rotor est à l'arrêt, les ensembles sustentateurs ne subissent aucune force autre que la pesanteur et sont donc entraînés naturellement vers le bas.

Le rotor est donc couramment équipé d'un mécanisme dit « mécanisme de butée » qui limite le trajet des ensembles sustentateurs notamment en battement.

Selon une réalisation, le mécanisme de butée peut comprendre pour chacune des pales un organe de butée inférieur et un organe de butée supérieur qui forment des obstacles au trajet en battement individuel des pales respectivement vers le bas et vers le haut. Le mécanisme de butée inclut une piste de butée inférieure et une piste de butée supérieure qui sont agencées sur un organe de retenue et de mobilité. Par exemple, une armature d'une butée sphérique porte un patin de butée présentant une piste de butée.

En cas de mouvement en battement non désiré d'une pale, une piste de butée vient en contact contre un organe de butée ce qui limite de fait le mouvement en battement de cette pale.

Le mécanisme de butée a notamment pour fonction de limiter le mouvement en battement des pales quand le rotor est à l'arrêt et lors de la mise en rotation du rotor, et plus particulièrement en présence de vent. Ce mécanisme de butée peut aussi limiter le mouvement en battement des pales durant une opération de repliage de ces pales. En présence notamment de butées sphériques articulant une pale au moyeu, le mécanisme de butée tend à préserver cette butée sphérique lorsque le giravion est au sol en évitant qu'un mouvement en battement d'une pale en l'absence de force centrifuge induise un décollement des éléments constitutifs de la butée sphérique.

Lorsque le rotor est en rotation, les organes de butée supérieurs ne doivent éventuellement pas faire obstacle à la mobilité des ensembles sustentateurs, en particulier vers le haut. Le mécanisme de butée peut alors prévoir des moyens d'escamotage pour escamoter les organes de butée supérieurs lorsque le rotor est mis en service.

Les organes de butée supérieurs sont alors montés mobiles sur le moyeu entre deux positions, à savoir entre une position à atteindre en dessous d'une vitesse de rotation seuil du rotor et une position à atteindre au-delà de cette vitesse de rotation seuil

En résumé, un mécanisme de butée inclut usuellement un organe de butée supérieur par ensemble sustentateur, une piste de butée supérieure portée par un ensemble sustentateur, ainsi qu'un moyen d'escamotage pouvant positionner un organe de butée en vis-à-vis d'une piste de butée si nécessaire.

De plus, le mécanisme de butée comprend un anneau de butée basse commun à toutes les pales. Cet anneau de butée basse est mobile dans une gorge.

En vol, une seule pale à la fois peut éventuellement se déplacer vers le bas, et pousse l'anneau selon une direction opposée. L'anneau n'entrave donc pas le battement des éléments sustentateurs.

Par contre au sol, à faible régime de rotation et à l'arrêt, les ensembles sustentateurs viennent simultanément en contact avec l'anneau, ce qui induit leur immobilisation mutuelle en battement au travers de l'anneau. Dès lors, un tel anneau est parfois dénommé « anneau réciproque » au regard de sa fonction.

Un mécanisme de butée connu d'une pale comprend donc un anneau de butée basse commun à tous les éléments sustentateurs, et une butée haute escamotable rétractable par élément sustentateur.

Ces deux systèmes de butée sont indépendants et tendent à multiplier les pièces mécaniques dans un espace par nature restreint.

Par ailleurs, l'anneau de butée basse peut présenter une masse non négligeable sur un aéronef de fort tonnage, et générer un balourd à prendre en considération.

En outre, le remplacement d'un mécanisme de butée pour des raisons de maintenance peut s'avérer pénible, en nécessitant parfois le démontage de l'ensemble sustentateur associé.

De plus, l'agencement d'un mécanisme de butée sur un rotor est parfois difficile. En effet, un rotor peut comporter de multiples organes laissant peu de place pour agencer un système de butée.

Les documents FR 2 584 997, US 2 719 593, FR 2 551 723, FR 2 447 856, FR 2735094, GB 2073121 et EP 1371554 présentent divers systèmes de butée.

Le document US 2.717.653 présente un rotor muni d'un moyeu oscillant articulé à un mât. Le moyeu porte une pluralité d'ensembles sustentateurs.

De plus, le rotor est équipé d'un mécanisme de butée comprenant un plateau annulaire qui coulisse sur le mât pour matérialiser une butée basse du moyeu. Dès lors, ce plateau est contrôlé par un système d'escamotage comprenant des masselottes mobiles sous l'effet de la force centrifuge. Lorsque la force centrifuge exercée sur les masselottes est faible, le plateau restreint le débattement angulaire du moyeu à un faible débattement angulaire. A l'inverse, lorsque la force centrifuge exercée sur les masselottes est élevée, le plateau coulisse et restreint le débattement angulaire du moyeu à un fort débattement angulaire.

Le document US 2.717.653 est donc éloigné du domaine de l'invention, à savoir le domaine du traitement du mouvement en battement d'ensembles sustentateurs.

Le document US 2.475.333 présente un rotor muni d'ensembles sustentateurs reliés à un moyeu par des organes de retenue et de mobilité.

Un compas muni de deux bielles articulées l'une à l'autre est agencé entre d'une part un organe de retenue et de mobilité et, d'autre part le mât. Lorsque le compas est déplié, les deux bielles du compas sont alignées et bloquent le battement vers le bas de l'ensemble sustentateur. Lorsque l'ensemble sustentateur bat vers le haut, le compas se plie pour autoriser un tel mouvement de battement de l'ensemble sustentateur.

Le document US 5.951.252 décrit une butée haute dépliable munie d'une tige filetée qui écarte les deux branches d'un compas. Chaque branche porte un patin servant de surface de butée.

Les documents US 2014/262645, EP 0135 296 et US 2012/256055 présentent des amortisseurs de traînée et n'ont donc aucun rapport avec l'invention.

Les documents US 2554774 et GB 2024133 sont aussi connus

Le but de la présente invention est de proposer un rotor muni d'un mécanisme simple et facile à atteindre pour limiter le trajet en battement des ensembles sustentateurs d'un rotor principal d'un giravion.

L'invention concerne donc un mécanisme de butée destiné à limiter le battement selon deux sens opposés d'un ensemble sustentateur d'un giravion par rapport à un système d'entraînement, ce système d'entraînement étant apte à entraîner en rotation ledit ensemble sustentateur autour d'un axe en élévation selon la revendication 1.

Ce mécanisme de butée comporte une unique bielle rigide ayant un débattement variable selon une direction longitudinale d'extension de la bielle, la bielle comprenant une tige et un corps, la tige étant mobile en translation par rapport au corps le long de la direction longitudinale selon ledit débattement, le mécanisme de butée comportant un organe de déplacement pour régler une amplitude du débattement en fonction d'au moins un paramètre prédéterminé, la bielle comprenant deux embouts aptes à être articulés respectivement à un ensemble sustentateur et à un système d'entraînement, un desdits deux embouts étant dénommé « premier embout » et étant attaché au corps et un desdits deux embouts étant dénommé « deuxième embout » et étant solidaire de ladite tige, ladite bielle n'étant pas un amortisseur.

Le terme « débattement » signifie que la bielle présente une longueur selon la direction longitudinale entre une extrémité du premier embout et une extrémité du deuxième embout qui peut varier en opération. Le débattement représente ainsi la faculté de la bielle à s'étendre ou à se rétracter sur une certaine amplitude. Le battement vers le haut et vers le bas d'un ensemble sustentateur est alors limité au débattement autorisé de la bielle.

L'expression « selon ledit débattement » signifie que le déplacement de la tige par rapport au corps et par suite le battement d'un ensemble sustentateur est autorisé par la bielle dans la limite du débattement de cette bielle.

L'expression « la tige étant mobile en translation par rapport au corps » signifie que la tige et le corps peuvent avoir un mouvement relatif. Ainsi, la tige peut être déplacée alors que le corps est maintenu dans une position sensiblement fixe par rapport au système d'entraînement, ou le corps peut être déplacé alors que la tige est maintenue dans une position sensiblement fixe par rapport au système d'entraînement.

L'expression « sensiblement fixe » signifie que l'organe associé comporte uniquement les degrés de liberté offerts à l'embout correspondant par rapport au système d'entraînement.

Dès lors, la bielle est articulée d'une part au système d'entraînement et d'autre part à un ensemble sustentateur par le premier embout et le deuxième embout. Cette bielle peut s'étendre ou se rétracter selon un débattement ayant une amplitude variable, cette amplitude étant réglée par le dispositif de déplacement. Ainsi, le battement d'un ensemble sustentateur est restreint à l'amplitude du débattement.

En effet, lorsque l'ensemble sustentateur tend à effectuer un mouvement de battement, cet ensemble sustentateur exerce un effort de traction ou de compression sur la bielle. La bielle étant immobilisée par ailleurs au système d'entraînement, cette bielle tend à s'étendre ou à se rétracter sous l'effet de l'effort exercé sur la bielle par l'ensemble sustentateur. Cette extension ou cette rétraction est autorisée par la bielle dans la limite du débattement possible de cette bielle à chaque instant.

Ainsi, lorsque l'aéronef est au sol, l'amplitude peut être minimisée. Dès lors, le battement de l'ensemble sustentateur au sol est limité à une faible amplitude entre une première position extrémale basse et une première position extrémale haute. Une telle faible amplitude peut être de l'ordre de deux degrés par exemple.

Par contre, l'organe de déplacement peut être activé en vol pour maximiser cette amplitude. Dès lors, le battement de l'ensemble sustentateur est limité à une forte amplitude entre une deuxième position extrémale basse et une deuxième position extrémale haute. Une telle forte amplitude peut être de l'ordre de trente degrés par exemple. Par exemple, l'ensemble sustentateur peut osciller de part et d'autre d'une position médiane, sur une amplitude inférieure de l'ordre de -10 degrés et une amplitude supérieure de l'ordre de 25 degrés.

La bielle du mécanisme de butée n'est pas une bielle à longueur variable usuelle. Une telle bielle à longueur variable comporte une vis pour qu'un opérateur puisse modifier sa longueur au sol. Sans intervention de l'opérateur, la longueur d'une bielle à longueur variable reste constante.

A l'inverse, la longueur de la bielle du mécanisme de butée peut varier de manière autonome en opération sur une amplitude variable.

Cette bielle du mécanisme de butée représente donc un unique organe mécanique permettant de limiter le battement vers le haut et vers le bas d'un ensemble sustentateur par rapport à un système d'entraînement d'un rotor.

Chaque bielle du mécanisme de butée peut être facilement agencée sur un rotor existant, par exemple sous le moyeu. Dès lors, le mécanisme selon l'invention peut libérer de l'espace au niveau d'une tête de rotor, par rapport à un dispositif usuel interposé entre un ensemble sustentateur et un moyeu par exemple. Un tel espace peut être utilisé à d'autres fins, et par exemple pour l'agencement d'un système de lutte contre le givre.

De plus, ce mécanisme de butée peut faciliter des opérations de maintenance. En effet, le mécanisme requiert seulement de fixer la bielle à l'ensemble sustentateur et au système d'entraînement. Dès lors, le démontage d'une bielle du mécanisme de butée n'implique pas le démontage obligatoire de l'ensemble sustentateur correspondant.

En outre, ce mécanisme de butée est adaptable sur différents rotors, et notamment indépendamment du nombre d'ensembles sustentateurs.

Par ailleurs, le mécanisme de butée comporte un nombre de pièces réduit, l'organe de déplacement d'une bielle pouvant être une partie intégrante de cette bielle. De plus, une unique butée permet de bloquer un ensemble sustentateur en battement vers le bas mais aussi vers le haut. Le mécanisme de butée peut donc être allégé par rapport à un mécanisme nécessitant deux butées spécifiques telles qu'une butée haute et un anneau réciproque.

Le mécanisme de butée peut en outre comporter une ou plusieurs des caractéristiques qui suivent.

Ainsi, au moins un desdits deux embouts peut comporter une articulation à rotule.

Par exemple, une bielle est reliée à un ensemble sustentateur et à un système d'entraînement respectivement par deux articulations à rotules pour minimiser son impact sur la liberté de mouvements en traînée et en pas d'un ensemble sustentateur.

Par ailleurs, le corps d'une bielle peut être articulé au premier embout pour être mobile en rotation par rapport au premier embout et à la tige autour de la direction longitudinale, l'organe de déplacement déplaçant en rotation le corps par rapport au premier embout et à ladite tige pour faire varier le débattement autorisé de la tige par rapport au corps.

La rotation relative du corps et de la tige modifie alors l'amplitude du débattement autorisé de la bielle.

En outre, la tige d'une bielle d'un mécanisme de butée peut s'étendre d'une première extrémité agencée dans le corps vers une deuxième extrémité munie du deuxième embout, cette tige étant mobile en rotation et en translation par rapport au corps de cette bielle, la tige et le corps comprenant chacun un organe de butée, un des organes de butée comprenant une protubérance radiale et l'autre organe de butée comprenant un renfoncement interne d'une paroi, la protubérance radiale évoluant dans le renfoncement, le renfoncement étant délimité longitudinalement par une surface de butée haute et une surface de butée basse entre lesquelles est agencée en permanence ladite protubérance, une hauteur séparant longitudinalement la surface de butée haute et la surface de butée basse variant circonférentiellement entre une hauteur minimale atteinte dans une première section du renfoncement et une hauteur maximale atteinte dans une deuxième section du renfoncement, l'amplitude du débattement étant minimale lorsque la protubérance est positionnée dans la première section par l'organe de déplacement et étant maximale lorsque ladite protubérance est positionnée dans la deuxième section par l'organe de déplacement.

Par exemple, la tige peut porter la protubérance, le corps comprenant alors une paroi munie d'un renfoncement. A l'inverse, le corps peut porter la protubérance, la tige présentant le renfoncement interne.

Ainsi, la tige et le corps sont mobiles l'un par rapport à l'autre en translation selon la direction longitudinale mais aussi en rotation.

L'expression « protubérance radiale » signifie que la tige ou le corps selon la variante comporte un tronçon s'étendant longitudinalement, la protubérance étant en saillie de ce tronçon selon une direction radiale perpendiculaire à la direction longitudinale. La protubérance saillant radialement de la tige ou du corps, la protubérance peut être agencée dans un renfoncement du corps ou de la tige selon la variante.

Ce renfoncement est délimité selon une direction parallèle à la direction longitudinale par une surface de butée haute du corps et une surface de butée basse.

En outre, l'expression « variant circonférentiellement » signifie que le renfoncement présente une hauteur qui varie le long d'une circonférence du corps ou de la tige.

Une section du renfoncement représente une coupe en élévation réalisée dans un plan passant par la direction longitudinale. Dans la première section la hauteur du renfoncement est minimale ce qui minimise le débattement autorisé de la tige relativement au corps. A l'inverse, dans la deuxième section, la hauteur du renfoncement est maximale ce qui maximise le débattement autorisé de la tige relativement au corps.

Ainsi, l'organe de déplacement peut positionner la protubérance dans la première section du renfoncement au sol et dans la deuxième section du renfoncement en vol, en générant une rotation relative de la tige et du corps d'une bielle.

Par ailleurs, la surface de butée haute et la surface de butée basse s'éloignent l'une de l'autre le long d'un sens circonférentiel partant de la première section et allant vers la deuxième section.

Cette caractéristique permet d'obtenir un renfoncement accueillant la protubérance qui présente une hauteur variable selon ledit sens circonférentiel.

En particulier, la surface de butée haute et la surface de butée basse peuvent être disposées de manière symétrique de part et d'autre d'un plan de symétrie perpendiculaire à la direction longitudinale.

L'évolution circonférentielle de chaque surface de butée peut être déterminée par le constructeur en fonction des transitions voulues par ce constructeur entre une phase de fonctionnement durant laquelle la protubérance doit se trouver dans la première section et une phase de fonctionnement durant laquelle la protubérance doit se trouver dans la deuxième section.

En outre, à chaque instant, la surface de butée haute peut limiter l'amplitude d'une extension de ladite bielle. Une extension de la bielle faisant suite à un mouvement de battement d'un ensemble sustentateur vers le haut est alors stoppée lorsque la protubérance entre en contact contre la surface de butée haute.

Par contre, la surface de butée basse peut éventuellement servir de butée basse dans certains cas seulement.

Par exemple, la surface de butée basse limite l'amplitude d'une rétraction de ladite bielle lorsque la protubérance est agencée dans la première section.

Selon une alternative, la surface de butée basse limite aussi l'amplitude d'une rétraction de ladite bielle lorsque la protubérance est agencée dans la deuxième section

Toutefois et selon une autre alternative, un espace interne séparant la tige d'un fond du corps s'étend sur une hauteur primaire inférieure à une hauteur secondaire séparant la protubérance de la surface de butée basse lorsque la protubérance est agencée dans la deuxième section, une rétraction de ladite bielle étant interrompue lorsque ladite tige entre en contact avec ledit fond.

Cette caractéristique vise à préserver la surface de butée basse et/ou la protubérance lors d'un mouvement en battement vers le bas d'un ensemble sustentateur en vol relativement fort.

Selon un mode de réalisation motorisé, l'organe de déplacement comporte un moteur et un système de mesure mesurant une vitesse de rotation d'un rotor, ledit paramètre prédéterminé étant ladite vitesse de rotation.

L'organe de déplacement positionne alors la protubérance d'une bielle dans la section adéquate du renfoncement d'une bielle en fonction de la vitesse de rotation du rotor.

Par exemple, en dessous d'une vitesse de rotation seuil, le moteur positionne la protubérance dans la première section. Par contre, au- dessus de cette vitesse de rotation seuil, le moteur positionne la protubérance dans la deuxième section

Selon un mode de réalisation mécanique, l'organe de déplacement comporte un élément pesant pour décaler le centre de gravité dudit corps de ladite direction longitudinale afin que la force centrifuge exercée sur le corps lors de la rotation dudit système d'entraînement génère une rotation du corps par rapport à la tige, ledit paramètre prédéterminé étant ladite force centrifuge ledit organe de déplacement comprenant un organe de rappel élastique tendant à déplacer ledit corps par rapport à la tige pour agencer ladite protubérance dans ladite première section.

L'élément pesant permet ainsi de décaler le centre de gravité du corps par rapport à la direction longitudinale.

Lors de la rotation du rotor, la force centrifuge exercée sur le corps induit alors la rotation du corps par rapport à la tige. Ce mouvement rotatif permet de la sorte de déplacer la protubérance d'une bielle au sein du renfoncement de cette bielle pour modifier l'amplitude du débattement autorisé de la bielle et donc de l'ensemble sustentateur. Par exemple, cette amplitude augmente lors du déplacement de la protubérance de la première section vers la deuxième section.

La force centrifuge induit un effort sur le corps qui va à l'encontre de l'effort de rappel généré par l'organe de rappel élastique. Par suite, lorsque la vitesse de rotation du rotor diminue, la force centrifuge exercée sur le corps de la bielle diminue. L'organe de rappel élastique ramène alors le corps dans sa position initiale pour limiter l'amplitude du débattement autorisé de la bielle et donc de l'ensemble sustentateur.

Un tel élément pesant peut comprendre au moins une masselotte qui est fixée au corps et déportée radialement par rapport à ce corps.

Par ailleurs, l'organe de rappel élastique peut être fixé au corps et/ou au premier embout et/ou à l'élément pesant.

Outre un mécanisme de butée, l'invention concerne un rotor muni d'une pluralité d'ensembles sustentateurs et d'un système d'entraînement pour entraîner en rotation les ensembles sustentateurs.

Dès lors, le rotor comporte pour au moins un ensemble sustentateur un unique mécanisme de butée selon l'invention du type décrit précédemment afin de limiter le battement vers le haut et vers le bas de cet ensemble sustentateur, la bielle du mécanisme de butée étant articulée à l'ensemble sustentateur et au système d'entraînement.

En outre, l'ensemble sustentateur étant mobile en rotation autour d'un axe de pas pour modifier l'incidence aérodynamique de cet ensemble sustentateur par rapport à l'air incident, ladite direction longitudinale d'une bielle du mécanisme de butée de cet ensemble sustentateur peut être située dans un plan dit « plan de pas » passant par cet axe de pas, l'axe de pas étant à l'aplomb de la direction longitudinale. L'expression « à l'aplomb » signifie que l'axe de pas est au sol au dessus de la direction longitudinale.

En alignant la bielle et notamment sous un ensemble sustentateur avec l'axe de pas de cet ensemble sustentateur, le mécanisme de butée a un impact limité sur le pas de l'ensemble sustentateur.

Outre un rotor, l'invention vise un aéronef muni d'un tel rotor.

L'invention et ses avantages apparaîtront avec plus de détails dans le cadre de la description qui suit avec des exemples donnés à titre illustratif en référence aux figures annexées qui représentent :
- la figure 1, un vue de côté d'un aéronef selon l'invention,
- la figure 2, une vue d'une bielle munie d'un organe de déplacement mécanique,
- les figures 3 et 4, une coupe présentant une protubérance agencée dans une première section d'un renfoncement pour minimiser le battement d'un ensemble sustentateur,
- la figure 5, une vue illustrant le passage d'une protubérance d'une première section vers une deuxième section,
- les figures 6 à 8, des vues illustrant une protubérance agencée dans une deuxième section d'un renfoncement pour maximiser le mouvement en battement d'un ensemble sustentateur,
- la figure 9, une vue présentant une bielle munie d'un corps portant des masses d'un élément pesant,
- la figure 10, une vue présentant une bielle munie d'un corps portant une masselotte,
- la figure 11, une vue d'une bielle munie d'un organe de déplacement motorisé, et
- la figure 12, une vue d'une bielle munie d'une protubérance, solidaire d'un corps, et d'un renfoncement ménagé dans une tige de la bielle.

Les éléments présents dans plusieurs figures distinctes sont affectés d'une seule et même référence.

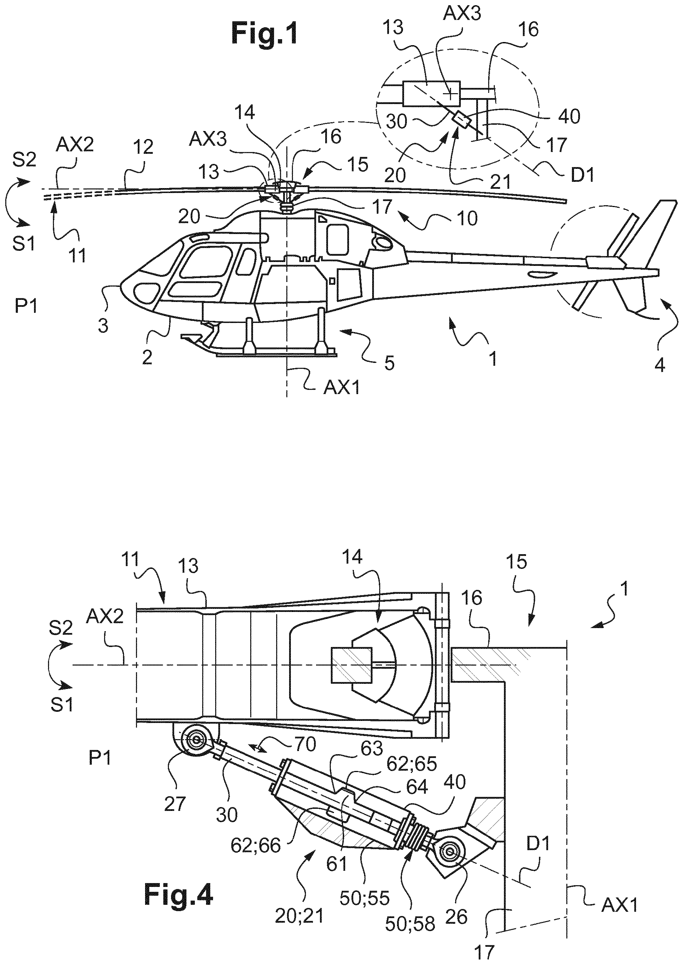

La figure 1 présente un aéronef 1 selon l'invention.

Cet aéronef comporte une cellule 2 s'étendant d'un nez 3 vers une extrémité arrière 4. La cellule repose au sol sur un atterrisseur 5.

Par ailleurs, la cellule porte au moins un rotor 10 de sustentation et/ou de propulsion. Sur la figure 1, l'aéronef 1 est donc un giravion.

Ce rotor 10 est muni d'une pluralité d'ensembles sustentateurs 11 portés chacun par un système d'entrainement 15. Le système d'entraînement 15 est relié à une installation motrice pour entrainer en rotation les ensembles sustentateurs 11 autour d'un axe en élévation AX1.

Par exemple, le système d'entraînement 15 comporte un mât 17 solidaire d'un moyeu 16. Ce moyeu 16 n'est donc pas articulé au mât 17 selon la figure 1. De plus, le système d'entraînement peut comprendre un compas reliant le mât à un ensemble de plateaux cycliques de commande du pas des pales.

Chaque ensemble sustentateur 11 inclut un élément sustentateur 12 et un manchon 13 formant une pale. Le manchon peut être intégré à l'élément sustentateur ou être relié à cet élément sustentateur

Dès lors, le manchon 13 est articulé au moyeu 16 par un organe de retenue et de mobilité 14, telle qu'une butée sphérique. Chaque ensemble sustentateur est notamment mobile en rotation autour d'un axe de pas AX2, et en battement autour d'un axe de battement AX3.

Pour limiter le mouvement de battement d'un ensemble sustentateur 12 vers le bas S1 et le haut S2, le rotor comporte un unique mécanisme de butée 20 par ensemble sustentateur 11. Le mécanisme de butée 20 d'un ensemble sustentateur est donc indépendant du mécanisme de butée 20 d'un autre ensemble sustentateur.

Un mécanisme de butée 20 selon l'invention comprend une unique bielle 21 apte à limiter le battement d'un ensemble sustentateur vers le haut et vers le bas. Cette unique bielle s'étend longitudinalement le long d'une direction longitudinale D1 d'une extrémité proximale articulée au système d'entraînement 15 vers une extrémité distale articulée à un ensemble sustentateur. En particulier, la bielle 21 peut être articulée à un manchon d'un ensemble sustentateur. De plus, la bielle 21 peut être articulée au mât 17, au moyeu 16 ou encore à un compas du système d'entraînement par exemple.

Pour limiter le battement d'un ensemble sustentateur 11, la bielle 21 présente un débattement autorisé selon une direction longitudinale D1 qui lui permet de s'étendre ou de se rétracter sur une certaine amplitude. L'amplitude du débattement de la bielle 21 peut varier pour conférer à un ensemble sustentateur une liberté de mouvement en battement qui varie en fonction d'un paramètre prédéterminé. Un tel paramètre peut être la vitesse de rotation du rotor autour de l'axe en élévation, ou encore la force centrifuge exercée sur la bielle 21 par exemple.

Dès lors, la longueur séparant l'extrémité proximale de la bielle et l'extrémité distale de la bielle varie sur une amplitude de débattement, cette amplitude variant en fonction de la valeur du paramètre prédéterminé.

A titre d'exemple, le débattement de la bielle est faible pour une vitesse de rotation du rotor faible induisant une force centrifuge faible, ce débattement étant important pour une vitesse de rotation du rotor élevée induisant une force centrifuge élevée.

Pour modifier l'amplitude du débattement autorisé de la bielle 21, cette bielle 21 comprend alors un organe de déplacement non représenté sur la figure 1.

Par ailleurs, la direction longitudinale D1 d'une bielle est par exemple située dans un plan dit « plan de pas P1 » passant par l'axe de pas AX2 de l'ensemble sustentateur articulé à la bielle 21. Cet axe de pas AX2 est alors à l'aplomb de la direction longitudinale D1, à savoir lorsque l'aéronef repose sur un sol sensiblement plat.

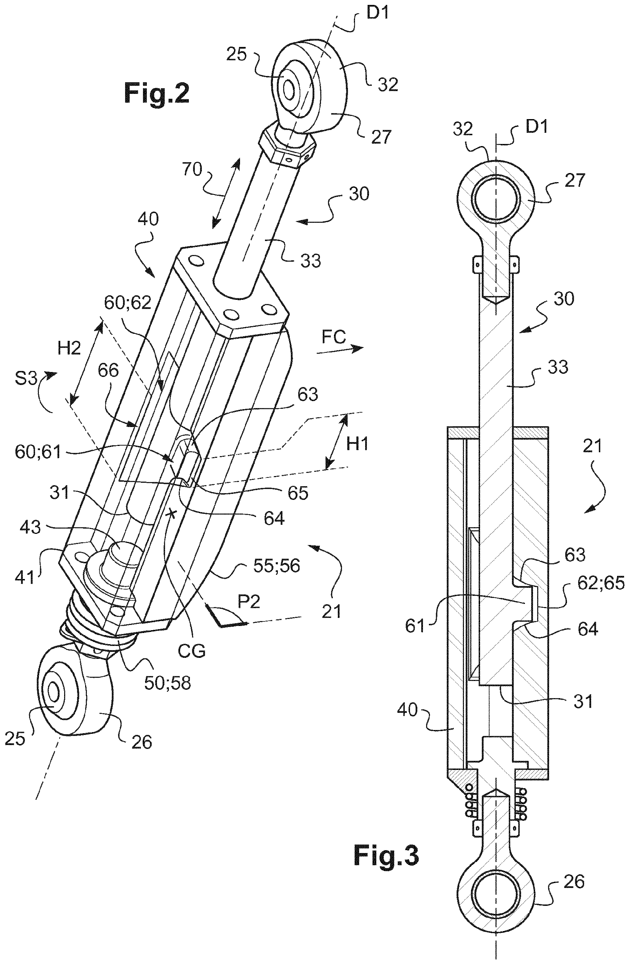

La figure 2 illustre une réalisation d'une bielle 21.

Indépendamment de la réalisation, la bielle 21 comprend une tige 30 saillant partiellement d'un corps 40.

Le corps 40 comporte une enveloppe 41 creuse s'étendant le long de la direction longitudinale D1.

Selon la réalisation de la figure 2, l'enveloppe est un cylindre.

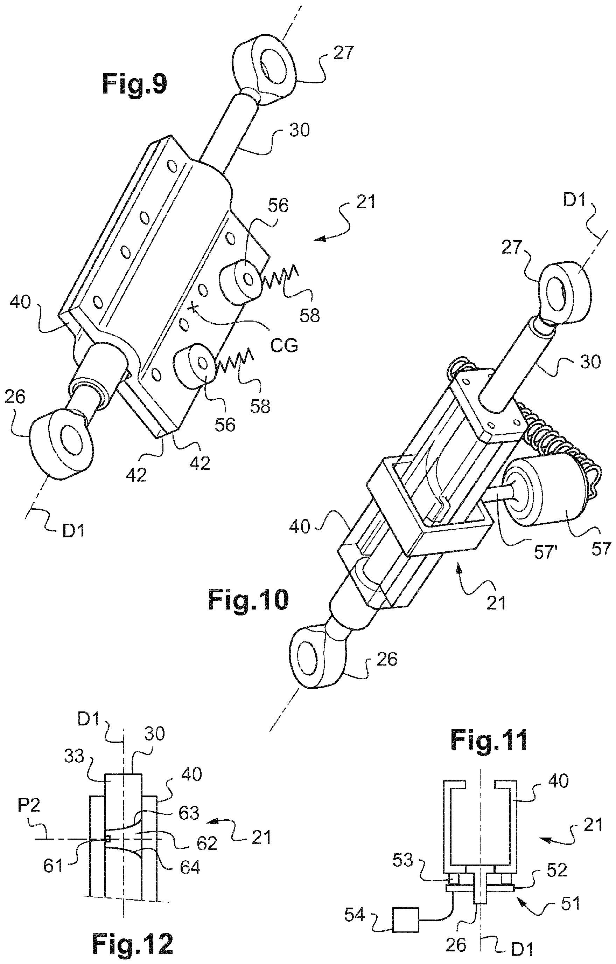

Selon la réalisation de la figure 9, l'enveloppe comporte deux plaques 42 accolées l'une à l'autre. Les plaques sont bombées pour présenter un creux entre elles.

De plus et en référence à la figure 2, ce corps 40 porte un embout dit « premier embout 26 ». En particulier, le corps 40 est articulé au premier embout 26 pour être libre en rotation autour de la direction longitudinale D1 par rapport au premier embout 26. Ainsi, un moyen de roulement ou un palier peut être interposé entre l'enveloppe 41 et le premier embout 26.

En outre, le premier embout peut comprendre une articulation usuelle, et en particulier une articulation à rotule 25.

Par ailleurs, la tige 30 s'étend d'une première extrémité 31 agencée dans le corps 40 au sein de l'enveloppe 41 vers une deuxième extrémité 32. La deuxième extrémité comprend un embout dit « deuxième embout 27 ». Par exemple, le deuxième embout est une partie intégrante de la tige ou est porté par une barre de cette tige. Par exemple, le deuxième embout est vissé à un bout d'une barre 33 de la tige 30.

Le deuxième embout peut comprendre une articulation usuelle, et en particulier une articulation à rotule 25.

Le premier embout 26 et le deuxième embout 27 permettent alors de fixer la bielle 21 au rotor. Selon les figures présentées, le premier embout 26 est articulé au système d'entraînement et le deuxième embout 27 à un ensemble sustentateur. Néanmoins, le premier embout 26 peut être articulé à l'ensemble sustentateur et le deuxième embout 27 au système d'entraînement.

La tige 30 est par ailleurs mobile en translation par rapport au corps 40 selon un débattement variable. Dès lors un organe de déplacement 50 permet de déplacer le corps 40 par rapport à la tige en rotation autour de la direction longitudinale D1 pour régler ce débattement.

L'organe de déplacement permet par exemple de faire tourner le corps 40 autour du premier embout 26 et de la tige 30.

Selon la réalisation de la figure 11, l'organe de déplacement 50 peut être au moins partiellement motorisé. Cet organe de déplacement 50 comporte alors un moteur 51. Par exemple, le moteur 51 est un moteur électrique muni d'un stator 52 solidaire du premier embout 26 et d'un rotor 53 solidaire du corps 40 en rotation autour de la direction longitudinale D1.

L'organe de déplacement comporte de plus un système de mesure 54 mesurant une vitesse de rotation du rotor 10 de l'aéronef. Tout système de mesure usuel apte à mesurer une vitesse de rotation peut être utilisé. Un tel système de mesure est classique sur un giravion.

Selon la réalisation de la figure 2, l'organe de déplacement 50 peut être mécanique.

Cet organe de déplacement 50 comporte un élément pesant 55 solidaire de l'enveloppe 41 et décalé par rapport à la direction longitudinale D1. Cet élément pesant 55 décale le centre de gravité CG du corps 40 de la direction longitudinale D1.

Le constructeur positionne l'élément pesant pour que la force centrifuge FC exercée sur le corps 40 lors de la rotation du système d'entraînement 15 génère une rotation du corps 40 par rapport à la tige 30 afin de modifier l'amplitude du débattement autorisé de la bielle 21.

Selon la figure 2, l'élément pesant 55 comporte une excroissance 56 faisant partie de l'enveloppe 41.

Selon la réalisation de la figure 9, des masses 56 sont fixées aux plaques 42 du corps.

Selon la réalisation de la figure 10, l'élément pesant 55 comprend au moins une masselotte 57 qui est fixée au corps 40. Cette masselotte est déportée radialement par rapport à ce corps 40 en étant portée par un tube 57' s'étendant entre le corps et cette masselotte.

Par ailleurs et en référence à la figure 2, l'organe de déplacement 50 peut comprendre un organe de rappel 58 élastique qui tend à contrecarrer la force centrifuge FC exercée sur ce corps.

Un tel organe de rappel peut comporter un bloc de matière élastique ou encore un ressort par exemple.

L'organe de rappel élastique peut être fixé au corps 40, à savoir à l'enveloppe 41, au premier embout 26, à l'élément pesant, voire au système d'entraînement.

Selon la figure 2, l'organe de rappel est fixé au corps 40 et au premier embout 26. Les figures 9 et 10 présentent d'autres configurations.

En référence à la figure 2, la bielle 21 peut comporter deux organes de butée qui coopèrent entre eux pour limiter l'extension et la rétraction de la bielle à une amplitude variable.

Ainsi, deux organes de butée sont respectivement portés par la tige 30 et le corps 40 de la bielle afin de limiter le mouvement relatif en translation selon la direction longitudinale D1 de la tige par rapport au corps 40.

Un premier organe de butée 60 comporte une protubérance 61 s'étendant radialement, à savoir selon une direction perpendiculaire à la direction longitudinale D1.

De plus, un deuxième organe de butée comporte un renfoncement 62 ménagé dans une paroi, la protubérance évoluant dans ce renfoncement.

Selon la figure 2, la protubérance fait partie de la tige 30, en étant porté par la barre 33. A l'inverse, le renfoncement 62 est ménagé dans une paroi périphérique de l'enveloppe du corps 40.

Selon la figure 12, la protubérance fait partie d'une paroi périphérique de l'enveloppe du corps 40. A l'inverse, le renfoncement 62 est ménagé dans la paroi de la barre 33.

Indépendamment de la variante et en référence à la figure 2, le renfoncement 62 est délimité longitudinalement, à savoir selon parallèlement à la direction longitudinale D1, par une surface de butée haute 63 et une surface de butée basse 64. Dès lors, la protubérance 61 est toujours disposée dans le renfoncement entre cette surface de butée haute 63 et cette surface de butée basse 64.

En outre, le renfoncement présente longitudinalement une hauteur qui varie circonférentiellement.

Ainsi, la hauteur qui sépare longitudinalement la surface de butée haute 63 et ladite surface de butée basse 64 varie circonférentiellement entre une hauteur minimale H1 atteinte dans une première section 65 du renfoncement 62 et une hauteur maximale H2 atteinte dans une deuxième section 66 du renfoncement 62.

Cette variation de hauteur permet de modifier l'amplitude du débattement de la bielle 21 en fonction de la section dans laquelle se trouve la protubérance. En effet, l'amplitude 70 du débattement est de fait minimale lorsque la protubérance 61 est positionnée dans la première section 65 par l'organe de déplacement 50. Par contre, cette amplitude est maximale lorsque la protubérance 61 est positionnée dans la deuxième section 66 par l'organe de déplacement 5. L'amplitude 70 est représentée par une double-flèche sur la figure 2.

En outre et pour faire varier ladite amplitude 70, la surface de butée haute 63 et la surface de butée basse 64 s'éloignent géométriquement l'une de l'autre le long d'un sens circonférentiel S3, en partant de la première section 65 et en allant vers la deuxième section 66.

Eventuellement, la surface de butée haute 63 et la surface de butée basse 64 sont symétriques l'une par rapport à l'autre par rapport un plan de symétrie P2 perpendiculaire à la direction longitudinale D1.

A chaque instant, la surface de butée haute 63 limite l'amplitude 70 d'une extension de la bielle 21 par interférence de forme entre la protubérance et cette surface de butée haute.

Par contre une rétraction de la bielle peut être limitée soit par interférence de forme entre la protubérance et cette surface de butée basse soit par interférence de forme entre la tige 30 et un fond 43 du corps 40. Un tel fond peut être matérialisé par une zone extrémale du premier embout qui obture l'espace creux du corps 40.

En référence aux figures 3 et 4, lorsque le rotor est à l'arrêt et tant que ce rotor est en dessous d'une vitesse de rotation seuil, la protubérance 61 de la bielle 21 se trouve dans la première section 65 du renfoncement 62.

Dès lors, la pale peut effectuer un mouvement sur une amplitude très faible correspondant aux jeux séparant la protubérance de la surface de butée haute 63 et de la surface de butée basse 64.

Un mouvement de battement S1 vers le bas de l'ensemble sustentateur est alors rapidement stoppé lorsque la protubérance heurte la surface de butée basse. De même, un mouvement de battement S2 vers le haut de l'ensemble sustentateur est rapidement stoppé lorsque la protubérance heurte la surface de butée haute 63.

Le battement de l'ensemble sustentateur est alors limité par l'amplitude 70 de la bielle 21, cette amplitude étant minimale lorsque la protubérance est agencée dans la première section 65.

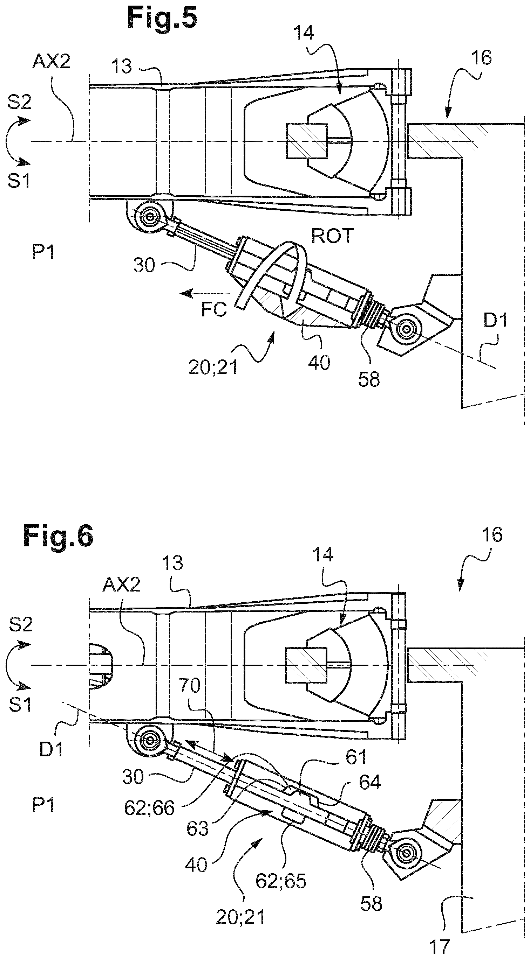

En référence à la figure 5, lorsque le rotor atteint une vitesse de rotation seuil, le moyen de déplacement induit une rotation ROT relative du corps 40 et de la tige 30 autour de la direction longitudinale D1. Cette rotation peut être initiée sous l'effet de la force centrifuge exercée sur un élément pesant de la bielle, ou par un moteur selon la réalisation. L'effort exercé par la force centrifuge ou le moteur sur le corps ou la tige est alors supérieur à l'effort exercé le cas échéant par un organe de rappel 58

La protubérance 61 se déplace donc circonférentiellement dans le renfoncement en allant de la première section du renfoncement vers sa deuxième section.

En référence à la figure 6, la protubérance se trouve dans la deuxième section à l'issue de la phase de transition. L'amplitude du débattement autorisé pour la bielle est alors maximale. De même, l'ensemble sustentateur peut alors effectuer un mouvement en battement vers le bas S1 et le haut S2 sur une amplitude maximale.

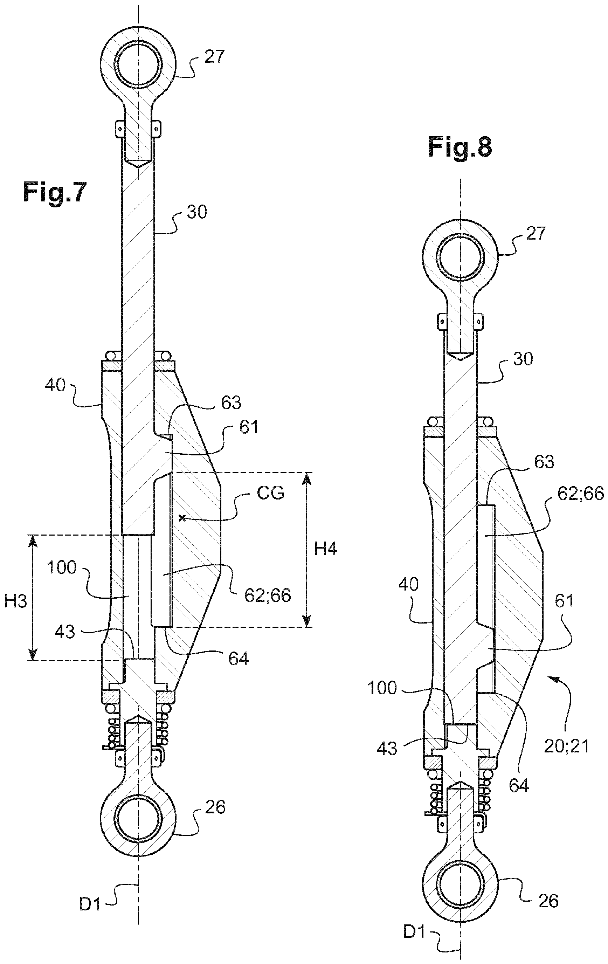

En référence à la figure 7, un mouvement en battement vers le haut S2 prend fin lorsque la protubérance 61 entre en contact contre la surface de butée haute 63.

Par contre, la figure 7 présente une coupe de la deuxième section. Quelle que soit la position de la protubérance au sein de cette deuxième section, un espace interne 100 séparant la tige 30 d'un fond 43 du corps 40 s'étend sur une hauteur primaire H3 qui est inférieure à une hauteur secondaire H4 séparant la protubérance 61 de la surface de butée basse 64.

Dès lors et en référence à la figure 8, lorsque la protubérance 61 est agencée dans la deuxième section 66, un mouvement en battement vers le bas S1 d'un ensemble sustentateur prend fin lorsque la tige entre en contact avec le fond 43.

Cette caractéristique permet d'obtenir une surface d'appui importante entre la tige et le corps, et donc un maintien ferme de l'ensemble sustentateur dans sa position basse.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans les revendications suivantes.

## Revendications

1. Mécanisme de butée (20) destiné à limiter le battement selon deux sens (S1, S2) opposés d'un ensemble sustentateur (11) d'un giravion (1) par rapport à un système d'entraînement (15), ce système d'entraînement (15) étant apte à entraîner en rotation ledit ensemble sustentateur (11) autour d'un axe en élévation (AX1),
ledit mécanisme de butée (20) comportant une unique bielle (21) rigide ayant un débattement variable selon une direction longitudinale (D1) d'extension de la bielle (21), ladite bielle (21) comprenant une tige (30) et un corps (40), ladite tige (30) étant mobile en translation par rapport audit corps (40) le long de la direction longitudinale (D1) selon ledit débattement, ledit mécanisme de butée (20) comportant un organe de déplacement (50) pour régler une amplitude (70) dudit débattement en fonction d'au moins un paramètre prédéterminé, ladite bielle (21) comprenant deux embouts (26, 27) aptes à être articulés respectivement à un dit ensemble sustentateur (11) et à un dit système d'entraînement (15), un desdits deux embouts étant dénommé « premier embout (26) » et étant attaché au corps (40) et un desdits deux embouts étant dénommé « deuxième embout (27) » et étant solidaire de ladite tige (30), **caractérisé en ce que** ladite tige (30) s'étend d'une première extrémité (31) agencée dans ledit corps (40) vers une deuxième extrémité (32) munie du deuxième embout (27), ladite tige (30) étant mobile en rotation et en translation par rapport audit corps (40), ladite tige (30) et ledit corps (40) comprenant chacun un organe de butée (60), un desdits organes de butée (60) comprenant une protubérance (61) radiale et l'autre organe de butée comprenant un renfoncement (62) interne d'une paroi, ladite protubérance (61) radiale évoluant dans ledit renfoncement (62), ledit renfoncement (62) étant délimité longitudinalement par une surface de butée haute (63) et une surface de butée basse (64) entre lesquelles est agencée en permanence ladite protubérance (61), une hauteur séparant longitudinalement ladite surface de butée haute (63) et ladite surface de butée basse (64) variant circonférentiellement entre une hauteur minimale (H1) atteinte dans une première section (65) dudit renfoncement (62) et une hauteur maximale (H2) atteinte dans une deuxième section (66) dudit renfoncement (62), ladite amplitude (70) dudit débattement étant minimale lorsque ladite protubérance (61) est positionnée dans ladite première section (65) par l'organe de déplacement (50) et étant maximale lorsque ladite protubérance (61) est positionnée dans ladite deuxième section (66) par l'organe de déplacement (50), ladite bielle n'étant pas un amortisseur.

2. Mécanisme de butée selon la revendication 1,
**caractérisé en ce qu'**au moins un desdits deux embouts comporte une articulation à rotule (25).

3. Mécanisme de butée selon l'une quelconque des revendications 1 à 2,
**caractérisé en ce que** ledit corps (40) est articulé au premier embout (26) pour être mobile en rotation par rapport au premier embout (26) et à ladite tige (30) autour de ladite direction longitudinale (D1), ledit organe de déplacement (50) déplaçant en rotation ledit corps (40) par rapport au premier embout (26) et à ladite tige (30) pour faire varier ledit débattement autorisé de ladite tige (30) par rapport audit corps (40).

4. Mécanisme de butée selon l'une quelconque des revendications 1 à 3,
**caractérisé en ce que** ladite surface de butée haute (63) et ladite surface de butée basse (64) s'éloignent l'une de l'autre le long d'un sens circonférentiel (S3) partant de la première section (65) et allant vers la deuxième section (66).

5. Mécanisme de butée selon l'une quelconque des revendications 1 à 4,
**caractérisé en ce que** ladite surface de butée haute (63) et ladite surface de butée basse (64) sont disposées de manière symétrique de part et d'autre d'un plan de symétrie (P2) perpendiculaire à ladite direction longitudinale (D1).

6. Mécanisme de butée selon l'une quelconque des revendications 1 à 5,
**caractérisé en ce qu'**à chaque instant, ladite surface de butée haute (63) limite l'amplitude (70) d'une extension de ladite bielle (21).

7. Mécanisme de butée selon l'une quelconque des revendications 1 à 6,
**caractérisé en ce que** ladite surface de butée basse (64) limite l'amplitude (70) d'une rétraction de ladite bielle (21) lorsque la protubérance (61) est agencée dans la première section (65).

8. Mécanisme de butée selon l'une quelconque des revendications 1 à 7,
**caractérisé en ce qu'**un espace interne (100) séparant ladite tige (30) d'un fond (43) dudit corps (40) s'étend sur une hauteur primaire (H3) inférieure à une hauteur secondaire (H4) séparant ladite protubérance (61) de ladite surface de butée basse (64) lorsque ladite protubérance (61) est agencée dans ladite deuxième section (66), une rétraction de ladite bielle (21) étant interrompue lorsque ladite tige entre en contact avec ledit fond (43).

9. Mécanisme de butée selon l'une quelconque des revendications 1 à 8,
**caractérisé en ce que** ledit organe de déplacement (50) comporte un moteur (51) et un système de mesure (54) mesurant une vitesse de rotation d'un rotor (10), ledit paramètre prédéterminé étant ladite vitesse de rotation.

10. Mécanisme de butée selon l'une quelconque des revendications 1 à 8,
**caractérisé en ce que** ledit organe de déplacement (50) comporte un élément pesant (55) pour décaler un centre de gravité (CG) dudit corps (40) de ladite direction longitudinale (D1) afin que la force centrifuge (FC) exercée sur le corps (40) lors de la rotation dudit système d'entraînement (15) génère une rotation du corps (40) par rapport à la tige (30), ledit paramètre prédéterminé étant ladite force centrifuge, ledit organe de déplacement (50) comprenant un organe de rappel (58) élastique tendant à déplacer ledit corps (40) par rapport à la tige (30) pour agencer ladite protubérance (61) dans ladite première section (65).

11. Mécanisme de butée selon la revendication 10,
**caractérisé en ce que** ledit élément pesant (55) comprend au moins une masselotte (57) qui est fixée au corps (40) et déportée radialement par rapport à ce corps (40).

12. Mécanisme de butée selon l'une quelconque des revendications 10 à 11,
**caractérisé en ce que** ledit organe de rappel (58) élastique est fixé au corps (40).

13. Mécanisme de butée selon l'une quelconque des revendications 10 à 12,
**caractérisé en ce que** ledit organe de rappel (58) élastique est fixé au premier embout (26).

14. Mécanisme de butée selon l'une quelconque des revendications 10 à 13,
**caractérisé en ce que** ledit organe de rappel (58) élastique est fixé à l'élément pesant (55).

15. Rotor (10) muni d'une pluralité d'ensembles sustentateurs (11) et d'un système d'entraînement (15) pour entraîner en rotation lesdits ensembles sustentateurs (11),
**caractérisé en ce que** ledit rotor (10) comporte pour au moins un ensemble sustentateur (11) un unique mécanisme de butée (20) selon l'une quelconque des revendications 1 à 14 afin de limiter le battement vers le haut et vers le bas dudit ensemble sustentateur (11), ladite bielle (21) dudit mécanisme de butée (20) étant articulée audit ensemble sustentateur (11) et audit système d'entraînement (15).

16. Rotor selon la revendication 15,
**caractérisé en ce que** ledit ensemble sustentateur (11) étant mobile en rotation autour d'un axe de pas (AX2) pour modifier une incidence aérodynamique de cet ensemble sustentateur (11), ladite direction longitudinale (D1) est située dans un plan dit « plan de pas (P1) » passant par ledit axe de pas (AX2), ledit axe de pas (AX2) étant à l'aplomb de ladite direction longitudinale (D1).

17. Aéronef (1) muni d'un rotor,
**caractérisé en ce que** ledit rotor (10) est selon l'une quelconque des revendications 15 à 16.

## Patentansprüche

1. Anschlagmechanismus (20), zum Begrenzen des Ausschlags einer Auftriebseinheit (11) eines Drehflüglers (1) in Bezug auf ein Antriebssystem (15) in zwei entgegengesetzten Richtungen (S1, S2), wobei dieses Antriebssystem (15) eingerichtet ist, die Auftriebseinheit (11) um eine Hochachse (AX1) zu drehen,
wobei der Anschlagmechanismus (20) eine einzelne starre Verbindungsstange (21) mit einer in einer Längsrichtung (D1) der Erstreckung der Verbindungsstange (21) variablen Bewegungsfreiheit umfasst,
wobei die Verbindungsstange (21) eine Stange (30) und einen Körper (40) umfasst,
wobei die Stange (30) in Bezug auf den Körper (40) in der Längsrichtung (D1) entsprechend dem Ausschlag verschiebbar ist,
der Anschlagmechanismus (20) ein Verschiebungselement (50) zum Einstellen einer Amplitude (70) des Ausschlags gemäß mindestens einem vorbestimmten Parameter umfasst,
wobei die Verbindungsstange (21) zwei Endstücke (26, 27) umfasst, die eingerichtet sind, um jeweils an eine Auftriebseinheit (11) und an ein Antriebssystem (15) angelenkt zu werden,
wobei eines der beiden Endstücke, als "erstes Endstück (26)" bezeichnet, am Körper (40) befestigt ist und eines der beiden Endstücke, als "zweites Endstück (27)" bezeichnet, mit der Stange (30) fest verbunden ist,
**dadurch gekennzeichnet, dass**
sich die Stange (30) von einem ersten Ende (81), das in dem Körper (40) angeordnet ist, zu einem zweiten Ende (32) erstreckt, das mit dem zweiten Endstück (27) versehen ist,
die Stange (30) in Bezug auf den Körper (40) in Rotation und Translation beweglich ist,
die Stange (30) und der Körper (40) jeweils ein Anschlagelement (60) umfassen,
eines der Anschlagelemente (60) einen radialen Vorsprung (61) umfasst und das andere Anschlagelement eine innere Aussparung (62) einer Wand umfasst,
der radiale Vorsprung (61) sich in der Aussparung (62) erstreckt,
wobei die Aussparung (62) in Längsrichtung durch eine obere Anschlagfläche (63) und eine untere Anschlagfläche (64) begrenzt ist, zwischen denen der Vorsprung (61) dauerhaft angeordnet ist,
eine Höhe, die die obere Anschlagfläche (63) und die untere Anschlagfläche (64) in der Längsrichtung trennt, in Umfangsrichtung zwischen einer minimalen Höhe (H1), die in einem ersten Abschnitt (65) der Aussparung (62) erreicht wird, und einer maximalen Höhe (H2), die in einem zweiten Abschnitt (66) der Aussparung (62) erreicht wird, variiert,
die Amplitude (70) des Ausschlags minimal ist, wenn der Vorsprung (61) durch das Verschiebungselement (50) in dem ersten Abschnitt (65) positioniert ist, und maximal ist, wenn der Vorsprung (61) durch das Verschiebungselement (50) in dem zweiten Abschnitt (66) positioniert ist,
wobei die Verbindungsstange kein Stoßdämpfer ist.

2. Anschlagmechanismus nach Anspruch 1,
**dadurch gekennzeichnet, dass** mindestens eines der beiden Endstücke ein Kugelgelenk (25) aufweist.

3. Anschlagmechanismus nach einem der Ansprüche 1 bis 2,
**dadurch gekennzeichnet, dass** der Körper (40) an das erste Endstück (26) angelenkt ist, um in Bezug auf das erste Endstück (26) und die Stange (30) um die Längsrichtung (D1) drehbar beweglich zu sein,
wobei das Verschiebungselement (50) den Körper (40) in Bezug auf das erste Endstück (26) und die Stange (30) dreht, um den zulässigen Hub der Stange (30) in Bezug auf den Körper (40) zu variieren.

4. Anschlagmechanismus nach einem der Ansprüche 1 bis 3,
**dadurch gekennzeichnet, dass** sich die obere Anschlagfläche (63) und die untere Anschlagfläche (64) entlang einer Umfangsrichtung (S3) vom ersten Abschnitt (65) zum zweiten Abschnitt (66) voneinander entfernen.

5. Anschlagmechanismus nach einem der Ansprüche 1 bis 4,
**dadurch gekennzeichnet, dass** die obere Anschlagfläche (63) und die untere Anschlagfläche (64) symmetrisch auf beiden Seiten einer zu der Längsrichtung (D1) senkrechten Symmetrieebene (P2) angeordnet sind.

6. Anschlagmechanismus nach einem der Ansprüche 1 bis 5,
**dadurch gekennzeichnet, dass** die obere Anschlagfläche (63) zu jedem Zeitpunkt die Amplitude (70) einer Streckung der Verbindungsstange (21) begrenzt.

7. Anschlagmechanismus nach einem der Ansprüche 1 bis 6,
**dadurch gekennzeichnet, dass** die untere Anschlagfläche (64) die Amplitude (70) eines Zurückziehens der Verbindungsstange (21) begrenzt, wenn der Vorsprung (61) in dem ersten Abschnitt (65) angeordnet ist.

8. Anschlagmechanismus nach einem der Ansprüche 1 bis 7,
**dadurch gekennzeichnet, dass** sich ein Innenraum (100), der die Stange (30) von einem Boden (43) des Körpers (40) trennt, über eine Primärhöhe (H3) erstreckt, die niedriger ist als eine Sekundärhöhe (H4), die den Vorsprung (61) von der unteren Anschlagfläche (64) trennt, wenn der Vorsprung (61) in dem zweiten Abschnitt (66) angeordnet ist, und dass ein Zurückziehen der Stange (21) unterbrochen wird, wenn die Stange in Kontakt mit dem Boden (43) kommt.

9. Anschlagmechanismus nach einem der Ansprüche 1 bis 8,
**dadurch gekennzeichnet, dass** das Verschiebungselement (50) einen Motor (51) und ein Messsystem (54) umfasst, das eine Drehgeschwindigkeit eines Rotors (10) misst, wobei der vorbestimmte Parameter die Drehgeschwindigkeit ist.

10. Anschlagmechanismus nach einem der Ansprüche 1 bis 8,
**dadurch gekennzeichnet, dass** das Verschiebungselement (50) ein Gewichtselement (55) zum Verschieben eines Schwerpunktes (CG) des Körpers (40) aus der Längsrichtung (D1) aufweist, so dass die auf den Körper (40) während der Drehung des Antriebssystems (15) ausgeübte Zentrifugalkraft (FC) eine Drehung des Körpers (40) relativ zur Stange (30) bewirkt, wobei der vorgegebene Parameter die Zentrifugalkraft ist, wobei das Verschiebungselement (50) ein elastisches Rückstellelement (58) umfasst, das dazu neigt, den Körper (40) relativ zur Stange (30) zu bewegen, um den Vorsprung (61) in dem ersten Abschnitt (65) anzuordnen.

11. Anschlagmechanismus nach Anspruch 10,
**dadurch gekennzeichnet, dass** das Gewichtselement (55) mindestens ein Fliehgewicht (57) umfasst, das am Körper (40) befestigt und radial zu diesem Körper (40) versetzt ist.

12. Anschlagmechanismus nach einem der Ansprüche 10 bis 11,
**dadurch gekennzeichnet, dass** das elastische Rückstellelement (58) an dem Körper (40) befestigt ist.

13. Anschlagmechanismus nach einem der Ansprüche 10 bis 12,
**dadurch gekennzeichnet, dass** das elastische Rückstellelement (58) an dem ersten Endstück (26) befestigt ist.

14. Anschlagmechanismus nach einem der Ansprüche 10 bis 13,
**dadurch gekennzeichnet, dass** das elastische Rückstellelement (58) an dem Gewichtselement (55) befestigt ist.

15. Rotor (10) mit einer Mehrzahl von Auftriebseinheiten (11) und einem Antriebssystem (15) zum Drehen der Auftriebseinheiten (11),
**dadurch gekennzeichnet, dass** der Rotor (10) für mindestens eine Auftriebseinheit (11) einen einzigen Anschlagmechanismus (20) nach einem der Ansprüche 1 bis 14 umfasst, um den Auf- und Abwärtsausschlag der Auftriebseinheiten (11) zu begrenzen,
und dass die Verbindungsstange (21) des Anschlagmechanismus (20) an der Auftriebseinheit (11) und dem Antriebssystem (15) angelenkt ist.

16. Rotor nach Anspruch 15,
**dadurch gekennzeichnet, dass** die Auftriebseinheit (11) um eine Steigungsachse (AX2) drehbar beweglich ist, um einen aerodynamischen Einfall dieser Auftriebseinheit (11) zu modifizieren, wobei sich die Längsrichtung (D1) in einer als "Steigungsebene" bezeichneten Ebene (P1) befindet, die durch die Steigungsachse (AX2) verläuft, wobei die Steigungsachse (AX2) zu der Längsrichtung (D1) senkrecht liegt.

17. Luftfahrzeug (1) mit einem Rotor, **dadurch gekennzeichnet, dass** der Rotor (10) nach einem der Ansprüche 15 bis 16 ist.

## Claims

1. Abutment mechanism (20) for limiting the flapping movement in two opposite directions (S1, S2) of a lift assembly of a rotorcraft with respect to a drive system (15), the drive system(15) being adapted to rotate the lift assembly (11) about an elevation axis (AX1), said abutment mechanism (20) comprising a single rigid connecting rod (21) having a modifiable deflection in a longitudinal direction (D1) for extending the connecting rod (21), the connecting rod (21) comprising a shaft (30) and a body (40), the shaft (30) being moveable in translation relative to the body (40) along the longitudinal direction (D1) according to the flapping movement, the abutment mechanism (20) comprising a displacing member (50) for setting a range (70) for the flapping movement according to at least one predetermined parameter, the connecting rod (21) comprising two hubs (26, 27) adapted to be pivotally connected respectively to a said lift assembly (11) and to a said drive system (15), one of the two hubs being referred to as "first hub (26)" and being attached to the body (40) and one of said two hubs being referred to as "second hub (27)" and being rigidly connected to said shaft (30), **characterised in that** the shaft extends from a first end arranged in the body (40) to a second end (32) provided with the second hub (27), the shaft (30) being mobile in rotation and in translation relative to the body (40), each comprising an abutment member (60), one of the abutment members (60) comprising a radial protrusion and the other abutment member comprising an internal recess of a wall, the radial protrusion functioning in the recess (62), the recess (62) being longitudinally defined by an upper abutment surface (63) and a lower abutment surface (64) between which said protrusion (61) is permanently arranged, a height longitudinally separating the upper abutment surface (63) and the lower abutment surface (64) circumferentially varying between a minimum height (H1) reached in a first section (65) of the recess (62) and a maximum height (H2) reached in a second section (66) of the recess (62), the range (70) of the flapping movement being lowest when the protrusion (61) is positioned in the first section (65) by the displacing member (50) and being highest when the protrusion is positioned in the second section by the displacing member, wherein the connecting rod is not a damper.

2. Abutment mechanism according to claim 1, **characterised in that** at least one of the two hubs comprises a ball joint (25).

3. Abutment mechanism according to any one of claims 1 to 2, **characterised in that** the body (40) is pivotally connected to the first hub (26) to be rotatable relative to the first hub (26) and the shaft (30) around said longitudinal direction (D1), the displacing member (50) rotating the body (40) relative to the first hub (26) and the shaft (30) for varying the permitted flapping movement of the shaft (30) relative to the body (40).

4. Abutment mechanism according to any one of claims 1 to 3, **characterised in that** the upper abutment surface (63) and the lower abutment surface (64) are spaced apart from each other along a circumferential direction (S3) from the first section (65) to the second section (66).

5. Abutment mechanism according to any one of claims 1 to 4, **characterised in that** the upper abutment surface (63) and the lower abutment surface (64) are arranged symmetrically on either side of a plane of symmetry (P2) perpendicular to the longitudinal direction (D1).

6. Abutment mechanism according to any one of claims 1 to 5, **characterised in that**, at each instant, the upper abutment surface (63) limits the extension (70) range of the connecting rod (21).

7. Abutment mechanism according to any one of claims 1 to 6, **characterised in that** the lower abutment surface (64) limits the retraction range of the connecting rod (21) when the protrusion (61) is arranged in the first section (65).

8. Abutment mechanism according to any one of claims 1 to 7, **characterised in that** an inner space (100) separating the shaft from a base (43) of the body (40) extends over a primary height (H3) less than a secondary height (H4) separating the protrusion (61) from the lower abutment surface (64) when the protrusion (61) is arranged in the second section (66), the connecting rod (21) ceasing to retract when the connecting rod (21) comes into contact with the base (43).

9. Abutment mechanism according to any one of claims 1 to 8, **characterised in that** the displacing member (50) comprises a motor (51) and a measuring system (54), measuring a rotational speed of a rotor (10), the predetermined parameter being the rotational speed.

10. Abutment mechanism according to claim 10, **characterised in that** the displacing member (50) comprises a weighting element (55) for shifting a centre of gravity (CG) of the body (40) from the longitudinal direction (D1) so that the centrifugal force (CF) exerted on the body (40) during the rotation of the drive system (15) rotates the body (40) with respect to the shaft (30), the predetermined parameter being the centrifugal force, the displacing member (50) comprising an elastic return member (58), which attempts to move the body (40) relative to the shaft (30) to arrange the protrusion (61) in the first section (65).

11. Abutment mechanism according to claim 10, **characterised in that** the weighting element (55) comprises at least one fly weight (57) which is attached to the body (40) and extends radially relative to the body (40).

12. Abutment mechanism according to any one of claims 10 to 11, **characterised in that** the elastic return member (58) is connected to the body (40).

13. Abutment mechanism according to any one of claims 10 to 12, **characterised in that** said elastic return member (58) is attached to the first hub (26).

14. Abutment mechanism according to any one of claims 10 to 13, **characterised in that** said elastic return member (58) is connected to the weighting element (55).

15. Rotor (10) provided with a plurality of lift assemblies (11) and a drive system (15) for rotating the lift assemblies (11), **characterised in that** the rotor (10) comprises at least one lift assembly (11) a single abutment mechanism (20) according to any one of claims 1 to 14 to limit the upward and downward flapping of the lift assembly (11), the connecting rod (21) of the abutment mechanism (20) being pivotally connected to the lift assembly (11) and the drive system (15).

16. Rotor according to claim 15, **characterised in that** the lift assembly (11) is rotatable about a pitch axis (AX2) to modify an aerodynamic impact of said lift assembly (11), the longitudinal direction (D1) is located in a plane referred to as "pitch plane (P1)" passing through the pitch axis (AX2), the pitch axis (AX2) being perpendicular to the longitudinal direction. (D1).

17. Aircraft (1) provided with a rotor, **characterised in that** the rotor (10) is according to any one of claims 15 to 16.
